# EUROPEAN PATENT APPLICATION

(11) **EP 4 779 480 A1**
(43) Date of publication of application: **22.07.2026**
(21) Application number: 25869645.9
(22) Date of filing: 13.06.2025
(51) Int. Cl.: G06F 12/0862

(54) **MEMORY ACCESS METHOD AND RELATED DEVICE**

(30) Priority: 28.11.2024 CN 202411736241
(71) Applicant: Hygon Information Technology Co., Ltd., Binhai New Area, Tianjin 300392 (CN)
(72) Inventor: CAO, Jun, Tianjin 300392 (CN); LIANG, Yan, Tianjin 300392 (CN); DU, Shu´an, Tianjin 300392 (CN); GENG, Jianbo, Tianjin 300392 (CN); CUI, Zehan, Tianjin 300392 (CN)
(74) Representative: Bergenstråhle & Partners AB
(86) International application number: PCT/CN2025/100799
(87) International publication number: WO 2026/113333

(57) **Abstract**

Embodiments of the present disclosure provide a memory access method and related devices, in which the method comprises: obtaining a prefetch request, which is a prediction request generated by a processor, and an extraction request obtained by extracting an access request sent by the processor to a memory, wherein the prefetch request includes at least a memory address and control information; sending the prefetch request to a prefetch network; reading prefetch data corresponding to the prefetch request from the memory based on the prefetch request; judging whether a memory address of the access request sent by the processor to the memory matches that of the prefetch request; and when the memory address of the access request sent by the processor to the memory matches that of the prefetch request, returning the prefetch data to the processor as feedback data of the access request. The embodiments of the present disclosure can improve the efficiency of data transmission.

## Description

The present disclosure claims the priority of Chinese patent with an application number of 202411736241.2, a patent title of "memory access method and related devices", and filed on November 28, 2024, the entire content of which is incorporated herein by reference.

### Technical Field

Embodiments of the present disclosure relate to the field of computer technologies, and particularly to a memory access method and related devices.

### Background

In the design of Network-on-Chip (NoC), the efficiency of data transmission between a processor (e.g., a CPU) and a memory, particularly in terms of bandwidth and latency, has always been a core challenge faced by designers. In recent years, as the progress of semiconductor manufacturing processes has slowed down, the size of chips has continuously expanded with the increasing maturity of processes, and many chip designs are approaching the physical limits of lithography technology. Such large-scale chip designs not only increase the design complexity but also lead to increasingly prominent data latency, which has become the main bottleneck in latency when the processor accesses the memory.

Against this background, how to reduce the latency to improve the efficiency of data transmission has become an urgent technical problem to be solved by those skilled in the art.

### Summary

In view of this, the embodiments of the present disclosure provide a memory access method and related devices to improve the efficiency of data transmission.

In order to achieve the above objective, the embodiments of the present disclosure provide the following technical solutions.

In a first aspect, an embodiment of the present disclosure provides a memory access method, including:
obtaining a prefetch request, which is a prediction request generated by a processor, and/or an extraction request obtained by extracting an access request sent by the processor to a memory, wherein the prefetch request includes at least a memory address and control information;
reading prefetch data corresponding to the prefetch request from the memory based on the prefetch request;
judging whether a memory address of the access request sent by the processor to the memory matches that of the prefetch request; and
when the memory address of the access request sent by the processor to the memory matches that of the prefetch request, returning the prefetch data to the processor as feedback data of the access request.

Optionally, when the memory address of the access request sent by the processor to the memory does not match that of the prefetch request, the prefetch data is discarded.

Optionally, when the prefetch request is the prediction request generated by the processor, and/or the extraction request obtained by extracting the access request sent by the processor to the memory, after the step of obtaining a prefetch request and before the step of reading prefetch data corresponding to the prefetch request from the memory based on the prefetch request, the method further includes:
deduplicating the prefetch requests with the same memory address; and
transmitting the deduplicated prefetch requests based on a prefetch network.

Optionally, after the step of deduplicating the prefetch requests with the same memory address and before the step of transmitting the deduplicated prefetch requests based on a prefetch network, the method further includes:
configuring the prefetch requests entering a prefetch network with preset tags based on a preset rule.

Optionally, the memory access method is adapted to a multi-chip device, and a cross-chip transmission of the prefetch requests is made based on a prefetch network cross-chip line; the step of transmitting the deduplicated prefetch requests based on a prefetch network includes:
sending the prefetch requests from a sending end of a prefetch network cross-chip line in one chip to a receiving end of a prefetch network cross-chip line in another chip;
wherein the sending end of the prefetch network cross-chip line is disposed at a position closest to all processors in the chip where the sending end is located, and the receiving end of the prefetch network cross-chip line is disposed at a position close to the memory in the chip where the receiving end is located.

Optionally, the step of transmitting the deduplicated prefetch requests based on a prefetch network further includes:
caching the prefetch requests.

Optionally, the step of caching the prefetch requests includes:
discarding or replacing new prefetch requests when the cached prefetch requests overflow; and
discarding the prefetch requests when the prefetch requests are not sent to the memory within a preset time.

Optionally, a priority of the prefetch request is lower than that of the access request sent by the processor to the memory.

Optionally, the prefetch network includes a weight selector, which is configured to allocate different weight values to different links or nodes in the prefetch network.

In a second aspect, an embodiment of the present disclosure provides a memory access device, including:
an obtaining module configured to obtain a prefetch request, which is a prediction request generated by a processor, and/or an extraction request obtained by extracting an access request sent by the processor to a memory, wherein the prefetch request includes at least a memory address and control information; and
a prefetch request control module configured to read prefetch data corresponding to the prefetch request from the memory based on the prefetch request; judge whether a memory address of the access request sent by the processor to the memory matches that of the prefetch request; and when the memory address of the access request sent by the processor to the memory matches that of the prefetch request, return the prefetch data to the processor as feedback data of the access request.

Optionally, the prefetch request control module includes a reading module and a judgment module;
the reading module is configured to read the prefetch data corresponding to the prefetch request from the memory based on the prefetch request; and
the judgment module is configured to judge whether the memory address of the access request sent by the processor to the memory matches that of the prefetch request; and when the memory address of the access request sent by the processor to the memory matches that of the prefetch request, return the prefetch data to the processor as the feedback data of the access request.

Optionally, when the memory address of the access request sent by the processor to the memory does not match that of the prefetch request, the prefetch data is discarded.

Optionally, the memory access device further includes:
a deduplication module configured to deduplicate the prefetch requests; and
a transmission module configured to transmit the deduplicated prefetch requests based on a prefetch network.

Optionally, the memory access device further includes:
a tagging module configured to configure the prefetch requests entering a prefetch network with preset tags based on a preset rule.

In a third aspect, an embodiment of the present disclosure provides an electronic device, including at least one memory and at least one processor, wherein the memory stores one or more computer-executable instructions, and the processor calls the one or more computer-executable instructions to perform the memory access method according to the first aspect.

In a fourth aspect, an embodiment of the present disclosure provides a storage medium, wherein the storage medium stores one or more computer-executable instructions which, when executed, implement the memory access method according to the first aspect.

In a fifth aspect, an embodiment of the present disclosure provides a computer program product, including one or more computer-executable instructions which, when executed, implement the memory access method according to the first aspect.

The embodiments of the present disclosure provide a memory access method and related devices, in which the memory access method includes: obtaining a prefetch request, which is a prediction request generated by a processor, and/or an extraction request obtained by extracting an access request sent by the processor to a memory, wherein the prefetch request includes at least a memory address and control information; reading prefetch data corresponding to the prefetch request from the memory based on the prefetch request; judging whether a memory address of the access request sent by the processor to the memory matches that of the prefetch request; and when the memory address of the access request sent by the processor to the memory matches that of the prefetch request, returning the prefetch data to the processor as feedback data of the access request.

It can be seen that in the memory access method according to the embodiments of the present disclosure, the prefetch data corresponding to the prefetch request is read from the memory based on the prefetch request. Next, when the processor sends the access request, it is judged whether the memory address of the access request sent by the processor to the memory matches that of the prefetch request. When the memory address of the access request sent by the processor to the memory matches that of the prefetch request, it means that the processor is requesting exactly the prefetch data that has been read from the memory. At this time, the prefetch data can be directly returned to the processor as the feedback data of the access request, without the need to access the slower memory, thereby reducing the latency and then improving the efficiency of data transmission.

### Brief Description of the Drawings

In order to more clearly explain the technical solutions in the embodiments of the present disclosure or in the prior art, the drawings to be used in the description of the embodiments or the prior art will be briefly introduced as follows. Obviously, the drawings concerned in the following description only illustrate some embodiments of the present disclosure, and those of ordinary skill in the art can obtain other drawings from the provided drawings without paying any creative labor.
FIG. 1 illustrates an optional flowchart of a memory access method according to an embodiment of the present disclosure;
FIG. 2 illustrates a schematic diagram of an optional structure for a CPU to access a memory according to an embodiment of the present disclosure;
FIG. 3 illustrates a schematic diagram of an optional structure for an NOC cross-chip transmission according to an embodiment of the present disclosure;
FIG. 4 illustrates another optional flowchart of a memory access method according to an embodiment of the present disclosure;
FIG. 5 illustrates another optional flowchart of a memory access method according to an embodiment of the present disclosure;
FIG. 6 illustrates a schematic diagram of an optional structure for a prefetch network cross-chip transmission according to an embodiment of the present disclosure;
FIG. 7 illustrates a schematic diagram of an optional structure of a memory access device according to an embodiment of the present disclosure;
FIG. 8 illustrates a schematic diagram of another optional structure for a CPU to access a memory according to an embodiment of the present disclosure; and
FIG. 9 illustrates an optional block diagram of an electronic device according to an embodiment of the present disclosure.

### Description of Embodiments

The technical solutions in the embodiments of the present disclosure will be clearly and completely described below in conjunction with the drawings for the embodiments of the present disclosure. Obviously, those described are merely parts, rather than all, of the embodiments of the present disclosure. Based on the embodiments of the present disclosure, any other embodiment obtained by those of ordinary skill in the art without paying any creative labor should fall within the protection scope of the present disclosure.

As mentioned in the background, in the design of Network-on-Chip (NoC), the efficiency of data transmission between a processor (e.g., a CPU) and a memory, particularly in terms of bandwidth and latency, has always been a core challenge faced by designers. In recent years, as the progress of semiconductor manufacturing processes has slowed down, the size of chips has continuously expanded with the increasing maturity of processes, and many chip designs are approaching the physical limits of lithography technology. Such large-scale chip designs not only increase the design complexity but also lead to increasingly prominent data latency, which has become the main bottleneck in latency when the processor accesses the memory. Against this background, how to reduce the latency to improve the efficiency of data transmission has become an urgent technical problem to be solved by those skilled in the art.

On this basis, the embodiments of the present disclosure provide a memory access method and related devices, in which the memory access method includes: obtaining a prefetch request, which is a prediction request generated by a processor, and/or an extraction request obtained by extracting an access request sent by the processor to a memory, wherein the prefetch request includes at least a memory address and control information; reading prefetch data corresponding to the prefetch request from the memory based on the prefetch request; judging whether a memory address of the access request sent by the processor to the memory matches that of the prefetch request; and when the memory address of the access request sent by the processor to the memory matches that of the prefetch request, returning the prefetch data to the processor as feedback data of the access request.

It can be seen that in the memory access method according to the embodiments of the present disclosure, the prefetch data corresponding to the prefetch request is read from the memory based on the prefetch request. Next, when the processor sends the access request, it is judged whether the memory address of the access request sent by the processor to the memory matches that of the prefetch request. When the memory address of the access request sent by the processor to the memory matches that of the prefetch request, it means that the processor is requesting exactly the prefetch data that has been read from the memory. At this time, the prefetch data can be directly returned to the processor as the feedback data of the access request, without the need to access the slower memory, thereby reducing the latency and then improving the efficiency of data transmission.

The technical solutions in the embodiments of the present disclosure will be clearly and completely described below with reference to the drawings for the embodiments of the present disclosure. Obviously, those described are merely parts, rather than all, of the embodiments of the present disclosure.

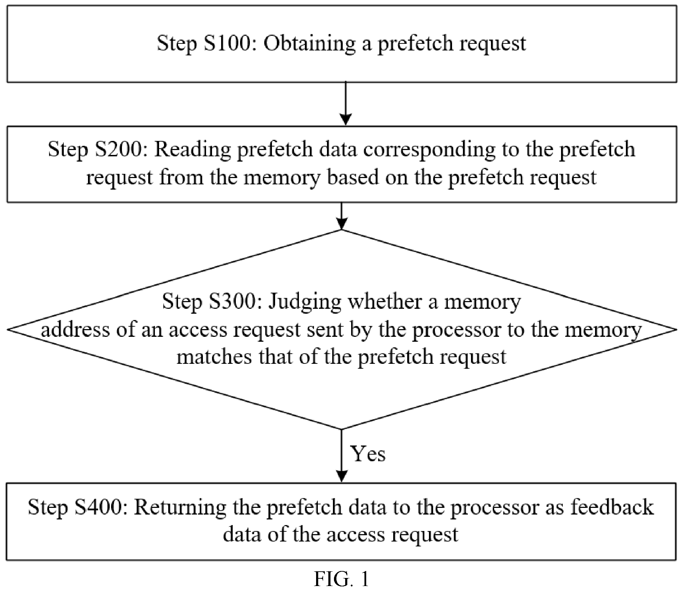

Referring to FIG. 1, which illustrates an optional flowchart of a memory access method according to an embodiment of the present disclosure. As illustrated in FIG. 1, the memory access method may include the following steps.

Step S100: obtaining a prefetch request.

In which, the prefetch request includes at least a memory address and control information. The memory address refers to an address of a memory that the prefetch request needs to access, and it specifies a specific location from which data to be read from or written into the memory. The memory controller may perform a data access operation on a memory area accessed by the prefetch request based on the memory address. The control information is used to instruct the memory controller on how to perform the data access operation, and may include, but is not limited to, an operation type, a data size, a priority, a control flag, or the like. In which, the operation type is used to indicate whether the request requiring a read operation or a write operation. For the prefetch request in the present disclosure, the operation type is the read operation because the purpose of prefetching is to obtain data in advance for subsequent use. The data size is used to specify the amount of data to be read or written, and for the prefetch request in the present disclosure, the data size is the amount of data to be read.

The prefetch request is a prediction request generated by a processor, and/or an extraction request obtained by extracting an access request sent by the processor to a memory. Taking the processor as a Central Processing Unit (CPU) as an example, the source of the prefetch request may be a prediction inside the CPU or a normal access request sent by the CPU to the memory. The two sources are explained below respectively.

The prediction inside the CPU refers to predicting a next instruction in advance based on prediction technology when the CPU executes a current instruction. This process may be completed by a predictor inside the CPU, which will predict the next instruction according to some algorithms and historical data.

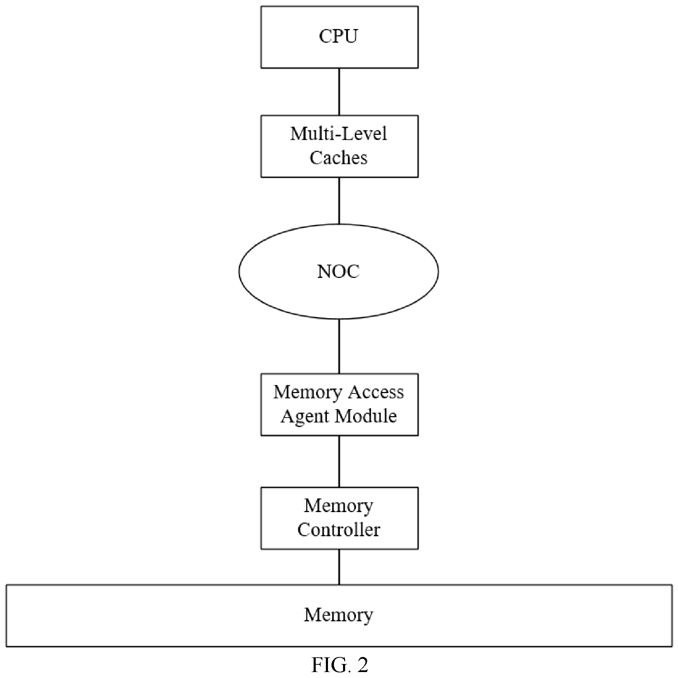

Referring to FIG. 2, which illustrates a schematic diagram of an optional structure for a CPU to access a memory according to an embodiment of the present disclosure. As illustrated in FIG. 2, a process where a CPU accesses a memory may be as follows: the CPU initiates an access request, which firstly goes through multi-level caches to minimize the number of direct accesses to the memory, thereby improving the access efficiency. Specifically, when needing to access data, the CPU firstly searches a highest-level cache. When there is a miss (i.e., the required data is not found in the highest-level cache), the CPU continues to search a next-level cache, and so on, until the required data is found or a bottom-level memory (e.g., a main memory) is reached. In which, a relatively small number of storage units in an upper-level cache can map a relatively large number of storage units in a lower-level cache, and a relatively small number of storage units in a last-level cache can map a relatively large number of storage units in the memory. In addition, the data access speed of an upper-level cache is faster than that of a lower-level cache, but the capacity of the upper-level cache is smaller than that of the lower-level cache.

In the CPU access process, when data is not found in all levels of caches, the access request enters a Network on Chip (NoC), and is routed to a memory access agent module which converts the access request into a format suitable for memory access and sends it to a memory controller. Next, the memory controller sends the access request to the memory for processing. The access request that needs to go through the above access process can be called a normal access request sent by the CPU to the memory.

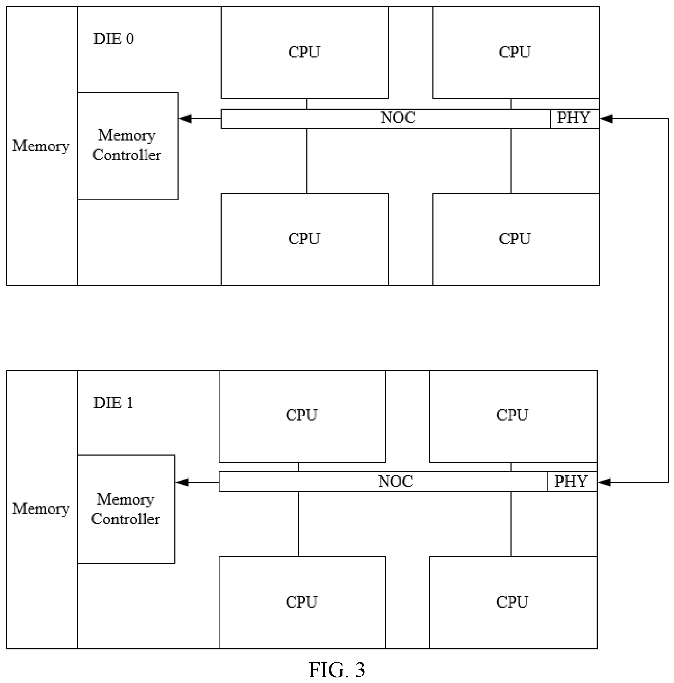

In some cases, when the required data is located on different chips, the NoC should be responsible for cross-chip transmission. Specifically, referring to FIG. 3, which illustrates an schematic diagram of an optional structure for an NOC cross-chip transmission according to an embodiment of the present disclosure. As illustrated in FIG. 3, the NoC in DIE 0 is connected to the NoC in DIE 1 through a Physical Layer (PHY) port to realize communication between the NoC in DIE 0 and the NoC in DIE 1.

In an optional implementation, a bit width of the memory address of the prefetch request is smaller than that of the access request transmitted through the NoC. For example, the bit width of the memory address may range from 32 bits to 64 bits. A smaller bit width enables the prefetch request to occupy less bandwidth during transmission, thereby reducing the possibility of network congestion and improving the efficiency of data transmission.

In which, a priority of the prefetch request is lower than that of the access request sent by the processor to the memory. That is, when an access request A sent by the processor to the memory and a prefetch request B both need to access the memory, the priority of the access request A sent by the processor to the memory is higher than that of the prefetch request B. In which, the memory address of the access request A sent by the processor to the memory is different from that of the prefetch request B.

Compared with the prefetch request B, the access request A sent by the processor to the memory is sent based on the current exact need. Therefore, when there is a conflict between the access request A and the prefetch request B, in order to ensure the correct execution and performance of the program, it is necessary to give priority to the access request A sent by the processor to the memory.

Continuing to refer to FIG. 1, Step S200 is performed by reading prefetch data corresponding to the prefetch request from the memory based on the prefetch request.

By reading the prefetch data corresponding to the prefetch request from the memory based on the prefetch request, and then returning the prefetch data to the processor as the feedback data of the access request when the memory address of the access request sent by the processor to the memory matches that of the prefetch request, it is unnecessary to access the slower memory, thereby reducing the latency and improving the efficiency of data transmission.

Continuing to refer to FIG. 1, Step S300 is performed by judging whether the memory address of the access request sent by the processor to the memory matches that of the prefetch request.

When the memory address of the access request sent by the processor to the memory matches that of the prefetch request, Step S400 is performed by returning the prefetch data to the processor as the feedback data of the access request. When the memory address of the access request sent by the processor to the memory matches that of the prefetch request, it means that the processor is requesting exactly the prefetch data that has been read from the memory. At this time, the prefetch data can be directly returned to the processor as the feedback data of the access request without the need of accessing the slower memory, thereby reducing the latency and improving the efficiency of data transmission.

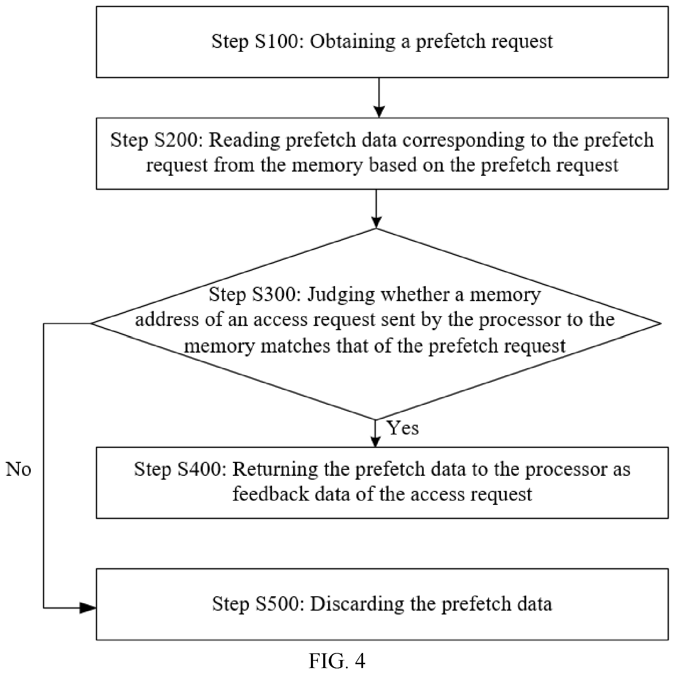

Further, referring to FIG. 4, which illustrates another optional flowchart of a memory access method according to an embodiment of the present disclosure. As illustrated in FIG. 4, when the memory address of the access request sent by the processor to the memory does not match that of the prefetch request, Step S500 is performed by discarding the prefetch data. Specifically, when a new prefetch request arrives and the cache space is insufficient to accommodate all the data to be prefetched, some prefetched data that has not been used by the CPU may be discarded to make room for the new prefetch request.

It can be seen that in the memory access method according to the embodiment of the present disclosure, the prefetch data corresponding to the prefetch request is read from the memory based on the prefetch request. Next, when the processor sends the access request, it is judged whether the memory address of the access request sent by the processor to the memory matches that of the prefetch request. When the memory address of the access request sent by the processor to the memory matches that of the prefetch request, it means that the processor is requesting exactly the prefetch data that has been read from the memory. At this time, the prefetch data can be directly returned to the processor as the feedback data of the access request without the need of accessing the slower memory, thereby reducing the latency and improving the efficiency of data transmission.

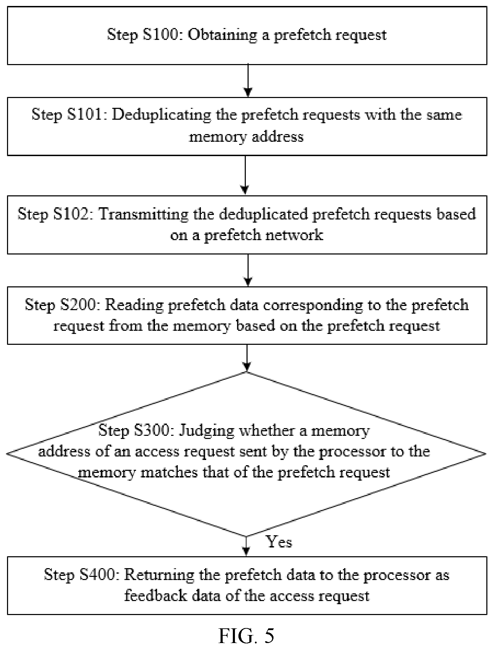

In an optional example, reference is made to FIG. 5, which illustrates another optional flowchart of a memory access method according to an embodiment of the present disclosure. As illustrated in FIG. 5, after the step of obtaining a prefetch request and before the step of reading prefetch data corresponding to the prefetch request from the memory based on the prefetch request, the method may further include:

Step S101: deduplicating the prefetch requests with the same memory address.

The prefetch request is a prediction request generated by a processor and/or an extraction request obtained by extracting an access request sent by the processor to a memory. When the prefetch requests include both the prediction request generated by the processor and the extraction request obtained by extracting the access request sent by the processor to the memory, prefetch requests with the same memory address may arrive successively within a short period of time. Therefore, it is necessary to deduplicate the prefetch requests with the same memory address. For example, the prefetch request that arrives first may be retained, and the subsequent prefetch request may be discarded.

Step S102: transmitting the deduplicated prefetch requests based on a prefetch network.

The prefetch request entering the prefetch network has the function of prefetching, for the purpose of obtaining data that may be needed in the future, thereby reducing the latency during actual access. Meanwhile, due to the uncertainties (e.g., whether the data will be actually used, the network conditions, etc.) during prefetching, a certain degree of prefetch packet loss is allowed.

In addition, the routing of the prefetch network may be simplified, so as to optimize the latency of the prefetch network. By reducing the complexity and the hierarchy of the routing, the transmission latency of data packets in the network can be reduced. For example, a more direct routing path may be adopted, or the number of routing nodes may be reduced.

Furthermore, selectors may be used. For example, "one-to-many" and "many-to-one" selectors may be employed to optimize data transmission, thereby reducing branching and merging during data transmission and reducing the latency. In which, the "one-to-many" selector means that one data source (also called a sending end or a source node) can simultaneously transmit data to a plurality of data receiving ends (also called target nodes or terminals). The "many-to-one" selector means that a plurality of data sources can simultaneously transmit data to one data receiving end.

In an optional implementation, the step of transmitting the deduplicated prefetch requests based on a prefetch network may further include: caching the prefetch requests. In the embodiment of the present disclosure, by caching the prefetch requests, when the memory address of the access request sent by the processor to the memory matches that of the prefetch request, the prefetch data can be directly returned to the processor as the feedback data of the access request without the need of accessing the slower memory, thereby reducing the latency and improving the efficiency of data transmission.

In a specific implementation, the step of caching the prefetch requests may include: discarding or replacing new prefetch requests when the cached prefetch requests overflow; and discarding the prefetch requests when the prefetch requests are not sent to the memory within a preset time. That is, when new prefetch requests arrive and the cache is full, the additional prefetch requests may be handled in two ways: one is to discard the new prefetch requests that exceed the capacity of the cache, and the other is to replace the existing prefetch requests in the cache using a replacement algorithm (e.g., LRU, LFU, or the like). In some cases, the prefetch requests may fail to be sent to the memory within the expected time, such that the prefetch requests are outdated or invalid. In order to prevent system resources from being occupied by invalid requests, when failing to be successfully sent to the memory within a preset time, the prefetch requests may be discarded.

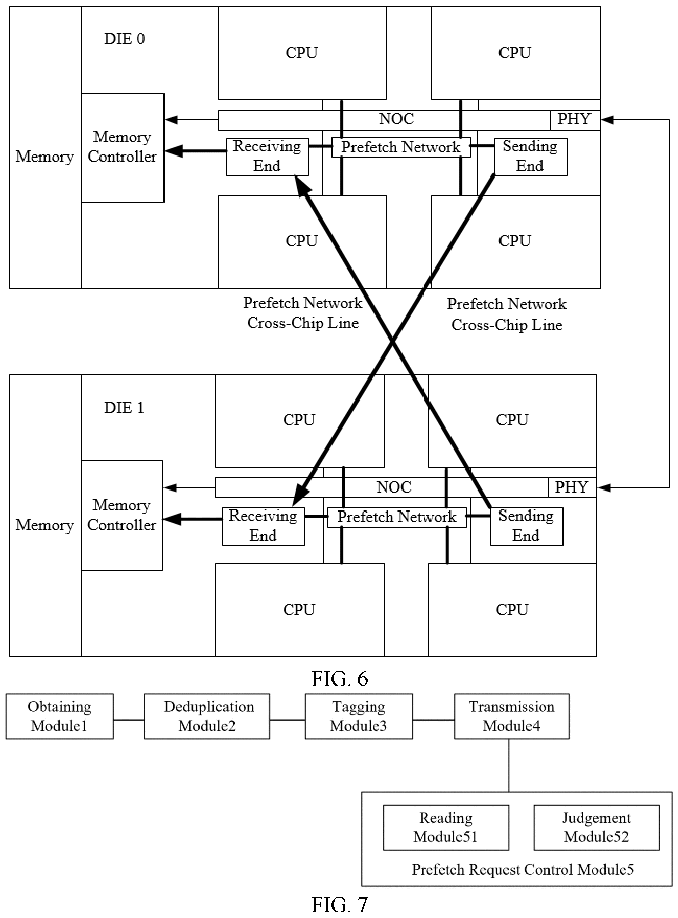

The memory access method is adapted to a multi-chip device. In an optional implementation, a cross-chip transmission of the prefetch requests is made based on a prefetch network cross-chip line; the step of transmitting the deduplicated prefetch requests based on a prefetch network may include: sending the prefetch requests from a sending end of a prefetch network cross-chip line in one chip to a receiving end of a prefetch network cross-chip line in another chip. Specifically, reference is made to FIG. 6, which illustrates a schematic diagram of an optional structural for a prefetch network cross-chip transmission according to an embodiment of the present disclosure. As illustrated in FIG. 6, the prefetch request is sent from a sending end of a prefetch network cross-chip line in DIE 0 to a receiving end of a prefetch network cross-chip line in DIE 1, and then sent from a sending end of the prefetch network cross-chip line in DIE 1 to a receiving end of the prefetch network cross-chip line in DIE 0. In which, the sending ends and the receiving ends in DIE 0 and DIE 1 may all be Physical Layer (PHY) ports.

In a specific implementation, the sending end of the prefetch network cross-chip line is disposed at a position closest to all processors in the chip where the sending end is located, and the receiving end of the prefetch network cross-chip line is disposed at a position close to the memory in the chip where the receiving end is located. By disposing the sending end at the position closest to the processor, the physical distance between the processor and the prefetch network can be shortened, thereby reducing the latency of data transmission. By disposing the receiving end at the position close to the memory, the memory access time can be reduced, as data can be transmitted from the prefetch network to the memory more quickly.

Further, to ensure the efficiency of data transmission and the resource utilization, the number of the prefetch network cross-chip lines may be set to match the scale of the prefetch network, because an excessive number of the cross-chip lines may lead to resource waste and increased complexity, while an insufficient number of the cross-chip lines may limit the efficiency and speed of data transmission.

To optimize the balance of the prefetch network, in an optional implementation, after the step of deduplicating the prefetch requests with the same memory address and before the step of transmitting the deduplicated prefetch requests based on a prefetch network, the method may further include: configuring the prefetch requests entering a prefetch network with preset tags based on a preset rule. In a specific implementation, the prefetch requests may be configured with tag 0 or tag 1, where the allocation of the tags may be random or in a uniform distribution mode (e.g., 0 and 1 are alternately allocated). In a node of the prefetch network, when the prefetch requests from different sources need to be sent to the same exit (i.e., when the "many-to-one" selector is employed), the tagged requests are firstly cached in an input buffer of the "many-to-one" selector. At the exit, the prefetch requests are sent in sequence. For example, the prefetch request tagged as 0 may be sent firstly, then the prefetch request tagged as 1 is sent; thereafter, the prefetch request tagged as 0 is sent again, and so on. By cyclically selecting the prefetch requests with different tags for transmission, the balanced bandwidth allocation can be achieved probabilistically, thus effectively avoiding the problem where one or more sources occupy a large amount of bandwidth for a long time, and cause other sources to be unable to obtain sufficient bandwidth.

In another optional implementation, the prefetch network may be configured with a weight selector, which is configured to allocate different weight values to different links or nodes in the prefetch network. For example, a specific weight value may be allocated to each node in the prefetch network. The weight value may reflect the processing capability, storage resources, or other related performance indicators of the node. When the prefetch request enters the network, the weight selector determines which node the prefetch request should be routed to according to these weight values to maximize the performance and the efficiency of the network. In a specific implementation, when a performance bottleneck or an overload occurs at a certain node, the weight value of the node may also be dynamically adjusted to reduce the number of prefetch requests sent to the node, thereby alleviating the pressure on the prefetch network.

It can be seen that the memory access method according to the embodiment of the present disclosure, the prefetch data corresponding to the prefetch request is read from the memory based on the prefetch request. Next, when the processor sends the access request, it is judged whether the memory address of the access request sent by the processor to the memory matches that of the prefetch request. When the memory address of the access request sent by the processor to the memory matches that of the prefetch request, it means that the processor is requesting exactly the prefetch data that has been read from the memory. At this time, the prefetch data can be directly returned to the processor as the feedback data of the access request without the need of accessing the slower memory, thereby reducing the latency and improving the efficiency of data transmission.

A memory access device according to the embodiments of the present disclosure will be introduced as follows. The memory access device described below may be considered as a software functional module or a hardware functional module required to implement the memory access method according to the embodiments of the present disclosure. The content of the memory access device described below can be referenced in correspondence with the content of the method described above.

In an optional implementation, FIG. 7 exemplarily illustrates a schematic diagram of an optional structure of a memory access device according to an embodiment of the present disclosure. The memory access device is configured to implement the memory access method according to the embodiments of the present disclosure. As illustrated in FIG. 7, the memory access device may include:

an obtaining module 1 configured to obtain a prefetch request, which is a prediction request generated by a processor, and/or an extraction request obtained by extracting an access request sent by the processor to a memory, wherein the prefetch request includes at least a memory address and control information;

a prefetch request control module 5 configured to read prefetch data corresponding to the prefetch request from the memory based on the prefetch request; judge whether a memory address of the access request sent by the processor to the memory matches that of the prefetch request; and when the memory address of the access request sent by the processor to the memory matches that of the prefetch request, return the prefetch data to the processor as feedback data of the access request.

Optionally, the prefetch request control module 5 includes: a reading module 51 and a judgment module 52;
the reading module 51 is configured to read the prefetch data corresponding to the prefetch request from the memory based on the prefetch request;
the judgment module 52 is configured to judge whether the memory address of the access request sent by the processor to the memory matches that of the prefetch request; and when the memory address of the access request sent by the processor to the memory matches that of the prefetch request, return the prefetch data to the processor as the feedback data of the access request.

Optionally, when the memory address of the access request sent by the processor to the memory does not match that of the prefetch request, the prefetch data is discarded.

Optionally, the memory access device further includes:
a deduplication module 2 configured to deduplicate the prefetch requests; and
a transmission module 4 configured to transmit the deduplicated prefetch requests based on a prefetch network.

Optionally, the memory access device further includes:
a tagging module 3 configured to configure the prefetch requests entering a prefetch network with preset tags based on a preset rule.

Optionally, a cross-chip transmission of the prefetch requests is made based on a prefetch network cross-chip line; the transmission module 4 is configured to transmit the deduplicated prefetch requests based on a prefetch network, and performs the step of:
sending the prefetch requests from a sending end of a prefetch network cross-chip line in one chip to a receiving end of a prefetch network cross-chip line in another chip;
the sending end of the prefetch network cross-chip line is disposed at a position closest to all processors in the chip where the sending end is located, and the receiving end of the prefetch network cross-chip line is disposed at a position close to the memory in the chip where the receiving end is located.

Optionally, the deduplication module 2 is configured to deduplicate the prefetch requests based on a prefetch network, and performs the step of:
caching the prefetch requests.

Optionally, the caching the prefetch requests includes:
discarding or replacing new prefetch requests when the cached prefetch requests overflow; and
discarding the prefetch requests when the prefetch requests are not sent to the memory within a preset time.

Optionally, a priority of the prefetch request is lower than that of the access request sent by the processor to the memory.

Optionally, the prefetch network includes a weight selector, which is configured to allocate different weight values to different links or nodes in the prefetch network.

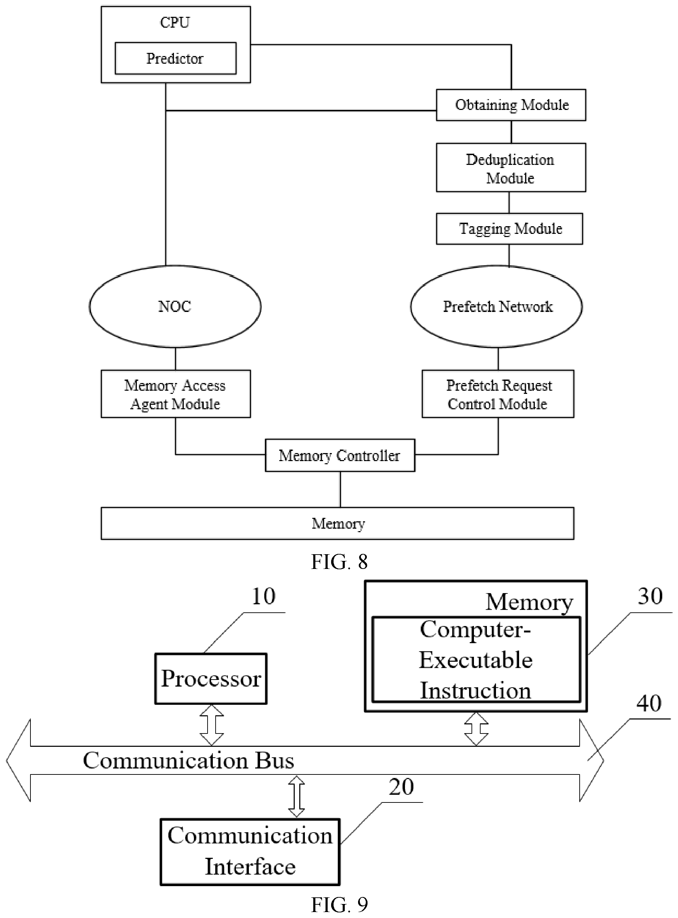

In an optional implementation, referring to FIG. 8, which illustrates a schematic diagram of another optional structure for a CPU to access a memory according to an embodiment of the present disclosure. As illustrated in FIG. 8, an obtaining module obtains a prediction request generated by a predictor inside a CPU and an extraction request obtained by extracting an access request sent by the processor to a memory. Next, a deduplication module deduplicates the prefetch requests with the same memory address, and then the deduplicated prefetch requests are transmitted based on a prefetch network. Finally, a prefetch request control module reads prefetch data corresponding to the prefetch requests from the memory based on the prefetch requests. Thereafter, when the access request sent by the processor is sent to a memory controller via an NOC and a memory access agent module, it is judged whether a memory address of the access request sent by the processor to the memory matches that of the prefetch request. When the memory address of the access request sent by the processor to the memory matches that of the prefetch request, it means that the processor is requesting the prefetch data that has been read from the memory. At this time, the prefetch data can be directly returned to the processor as feedback data of the access request without the need of accessing the slower memory, thereby reducing the latency and improving the efficiency of data transmission.

In an optional implementation, when the memory address of the access request sent by the processor to the memory does not match that of the prefetch request, the prefetch data is discarded.

In an optional implementation, when the memory address of the access request sent by the processor to the memory matches that of the prefetch request, but the prefetch data corresponding to the prefetch request has not been read completely yet, it is possible to wait for the prefetch data to be read completely and then return the prefetch data to the processor as the feedback data of the access request, without the need of accessing the slower memory.

In an optional implementation, it is also possible not to cache the prefetch data. When the prefetch data corresponding to the prefetch request is read completely, the prefetch data may be directly discarded if there is no access request matching the prefetch request.

In an optional implementation, before the deduplicated prefetch requests are transmitted based on the prefetch network, a tagging module may be used to configure the prefetch requests entering the prefetch network with preset tags based on a preset rule, where the preset tags are used to indicate information of a node in the prefetch network to which the prefetch requests should be sent. By indicating the information of the node in the prefetch network to which the prefetch requests should be sent, the prefetch requests can be managed and scheduled more effectively, thereby ensuring the load balance and the efficient operation of the prefetch network.

In an optional implementation, when returning the feedback data to the processor, the memory access agent module may determine a busy level of a memory state according to a busy degree of the memory, and configure the busy level into the feedback data, so that the predictor inside the CPU and an extraction module (not illustrated), which extracts the access request sent by the CPU to the memory, can limit or stop the generation of the prefetch request according to the busy level of the memory state fed back by the memory access agent module. For example, when the busy level of the memory state is higher than or equal to a preset busy level, the generation of the prefetch requests is stopped.

To be noted, the memory access method according to the embodiments of the present disclosure is particularly applicable to cases where there is an objective latency when the processor accesses the memory, and the time of latency is usually 50 nanoseconds to 200 nanoseconds.

It can be seen that in the memory access device according to the embodiment of the present disclosure, the prefetch data corresponding to the prefetch request is read from the memory based on the prefetch request. Next, when the processor sends the access request, it is judged whether the memory address of the access request sent by the processor to the memory matches that of the prefetch request. When the memory address of the access request sent by the processor to the memory matches that of the prefetch request, it means that the processor is requesting exactly the prefetch data that has been read from the memory. At this time, the prefetch data can be directly returned to the processor as the feedback data of the access request without the need of accessing the slower memory, thereby reducing the latency and improving the efficiency of data transmission.

The embodiments of the present disclosure further provide an electronic device, which may include at least one memory and at least one processor, wherein the memory stores one or more computer-executable instructions, and the processor calls the one or more computer-executable instructions to perform the aforementioned memory access method.

As an optional implementation, referring to FIG. 9, which illustrates an optional block diagram of an electronic device according to an embodiment of the present disclosure. As illustrated in FIG. 9, the electronic device may include at least one processor 10, at least one communication interface 20, at least one memory 30, and at least one communication bus 40.

In the embodiment of the present disclosure, the numbers of the processor 10, the communication interface 20, the memory 30, and the communication bus 40 each is at least one, and the processor 10, the communication interface 20, and the memory 30 are communicated with each other through the communication bus 40.

Optionally, the processor 10 may be a Central Processing Unit (CPU), a Graphics Processing Unit (GPU), a Neural-network Processing Unit (NPU), a Field Programmable Gate Array (FPGA), a Tensor Processing Unit (TPU), an AI chip, an Application Specific Integrated Circuit (ASIC), or one or more integrated circuits configured to implement the embodiments of the present disclosure.

Optionally, the communication interface 20 may be an interface of a communication module for network communication.

The memory 30 may include a high-speed RAM memory, and may also include a nonvolatile memory such as at least one disk memory. In which, the memory 30 stores one or more computer-executable instructions, and the processor 10 calls the one or more computer-executable instructions to perform the aforementioned memory access method.

The embodiments of the present disclosure further provide a storage medium, wherein the storage medium stores one or more computer-executable instructions which, when executed, implements the aforementioned memory access method.

The embodiments of the present disclosure further provide a computer program product including one or more computer-executable instructions which, when executed, implements the aforementioned memory access method.

A plurality of solutions of the embodiments of the present disclosure have been described above, and various optional modes introduced by the solutions of the embodiments may be combined with each other and cross-referenced without conflict, thereby extending various possible solutions of the embodiments, all of which can be regarded as those revealed and disclosed by the embodiments of the present disclosure.

Although the embodiments of the present disclosure have been revealed above, the present disclosure is not limited thereto. Any person skilled in the art can make various changes and modifications without departing from the spirit and the scope of the present disclosure, and the protection scope of the present disclosure should be based on the scope defined by the claims.

## Claims

1. A memory access method, comprising:
obtaining a prefetch request, which is a prediction request generated by a processor, and/or an extraction request obtained by extracting an access request sent by the processor to a memory, wherein the prefetch request includes at least a memory address and control information;
reading prefetch data corresponding to the prefetch request from the memory based on the prefetch request;
judging whether a memory address of the access request sent by the processor to the memory matches that of the prefetch request; and
when the memory address of the access request sent by the processor to the memory matches that of the prefetch request, returning the prefetch data to the processor as feedback data of the access request.

2. The memory access method according to claim 1, wherein when the memory address of the access request sent by the processor to the memory does not match that of the prefetch request, the prefetch data is discarded.

3. The memory access method according to claim 1, wherein when the prefetch request is the prediction request generated by the processor, and/or the extraction request obtained by extracting the access request sent by the processor to the memory, after the step of obtaining a prefetch request and before the step of reading prefetch data corresponding to the prefetch request from the memory based on the prefetch request, the method further comprises:
deduplicating the prefetch requests with the same memory address; and
transmitting the deduplicated prefetch requests based on a prefetch network.

4. The memory access method according to claim 3, wherein after the step of deduplicating the prefetch requests with the same memory address and before the step of transmitting the deduplicated prefetch requests based on a prefetch network, the method further comprises:
configuring the prefetch requests entering a prefetch network with preset tags based on a preset rule.

5. The memory access method according to claim 3, wherein the memory access method is adapted to a multi-chip device, and a cross-chip transmission of the prefetch requests is made based on a prefetch network cross-chip line; the step of transmitting the deduplicated prefetch requests based on a prefetch network comprises:
sending the prefetch requests from a sending end of a prefetch network cross-chip line in one chip to a receiving end of a prefetch network cross-chip line in another chip;
wherein the sending end of the prefetch network cross-chip line is disposed at a position closest to all processors in the chip where the sending end is located, and the receiving end of the prefetch network cross-chip line is disposed at a position close to the memory in the chip where the receiving end is located.

6. The memory access method according to claim 3, wherein the step of transmitting the deduplicated prefetch requests based on a prefetch network further comprises:
caching the prefetch requests.

7. The memory access method according to claim 6, wherein the step of caching the prefetch requests comprises:
discarding or replacing new prefetch requests when the cached prefetch requests overflow; and
discarding the prefetch requests when the prefetch requests are not sent to the memory within a preset time.

8. The memory access method according to claim 1, wherein a priority of the prefetch request is lower than that of the access request sent by the processor to the memory.

9. The memory access method according to claim 3, wherein the prefetch network comprises a weight selector, which is configured to allocate different weight values to different links or nodes in the prefetch network.

10. A memory access device, comprising:
an obtaining module configured to obtain a prefetch request, which is a prediction request generated by a processor, and/or an extraction request obtained by extracting an access request sent by the processor to a memory, wherein the prefetch request includes at least a memory address and control information; and
a prefetch request control module configured to read prefetch data corresponding to the prefetch request from the memory based on the prefetch request; judge whether a memory address of the access request sent by the processor to the memory matches that of the prefetch request; and when the memory address of the access request sent by the processor to the memory matches that of the prefetch request, return the prefetch data to the processor as feedback data of the access request.

11. The memory access device according to claim 10, wherein the prefetch request control module comprises a reading module and a judgment module;
the reading module is configured to read the prefetch data corresponding to the prefetch request from the memory based on the prefetch request; and
the judgment module is configured to judge whether the memory address of the access request sent by the processor to the memory matches that of the prefetch request; and when the memory address of the access request sent by the processor to the memory matches that of the prefetch request, return the prefetch data to the processor as the feedback data of the access request.

12. The memory access device according to claim 11, wherein when the memory address of the access request sent by the processor to the memory does not match that of the prefetch request, the prefetch data is discarded.

13. The memory access device according to claim 10, further comprising:
a deduplication module configured to deduplicate the prefetch requests; and
a transmission module configured to transmit the deduplicated prefetch requests based on a prefetch network.

14. The memory access device according to claim 10, further comprising:
a tagging module configured to configure the prefetch requests entering a prefetch network with preset tags based on a preset rule.

15. An electronic device, comprising at least one memory and at least one processor, wherein the memory stores one or more computer-executable instructions, and the processor calls the one or more computer-executable instructions to perform the memory access method according to any one of claims 1 to 9.

16. A storage medium, wherein the storage medium stores one or more computer-executable instructions which, when executed, implement the memory access method according to any one of claims 1 to 9.

17. A computer program product, comprising one or more computer-executable instructions which, when executed, implement the memory access method according to any one of claims 1 to 9.
